# EUROPÄISCHE PATENTANMELDUNG

(11) **EP 4 321 234 A1**
(43) Veröffentlichungstag der Anmeldung: **14.02.2024**
(21) Anmeldenummer: 22020389.7
(22) Anmeldetag: 12.08.2022
(51) Int. Cl.: B01D 53/00, B01D 53/04, B01D 53/047, B01D 53/22, C01B 32/50

(54) **VERFAHREN UND ANLAGE ZUR ENTFERNUNG VON KOHLENDIOXID AUS EINEM KOHLENDIOXIDHALTIGEN GASGEMISCH**

(71) Anmelder: Linde GmbH, 82049 Pullach (DE)
(72) Erfinder: Leitmayr, Werner, 82049 Pullach (DE); Lang, Martin, 82049 Pullach (DE); Ried, Thomas, 82049 Pullach (DE)
(74) Vertreter: Fischer, Werner

(57) **Zusammenfassung**

Es wird ein Verfahren (100) zur Abtrennung von Kohlendioxid aus einem Gasgemisch (101), das zumindest Kohlendioxid, Stickstoff, Sauerstoff, Argon und Wasser enthält, vorgeschlagen, wobei das Verfahren (100) einen ersten nichtkroygenen Trennschritt (21), einen zweiten nichtkryogenen Trennschritt (25) sowie einen kryogenen Trennschritt (24) umfasst, wobei der erste nichtkryogene Trennschritt (21) und der zweite nichtkryogene Trennschritt (25) Druckwechseladsorptionsschritte sind oder der erste nichtkryogene Trennschritt (21) ein Druckwechseladsorptionsschritt und der zweite nichtkryogene Trennschritt (25) ein Membrantrennschritt ist. Eine entsprechende Anlage ist ebenfalls Gegenstand der vorliegenden Erfindung.

## Beschreibung

Die Erfindung betrifft ein Verfahren und eine Anlage zur Entfernung von Kohlendioxid aus einem kohlendioxidhaltigen Gasgemisch, insbesondere einem Rauchgas.

### Hintergrund

Zur Reduzierung des Kohlendioxidausstoßes industrieller Prozesse existieren unterschiedliche Ansätze. Neben einer Erhöhung von Wirkungsgraden und damit der Vermeidung von Kohlendioxid kann auch eine Abtrennung und Speicherung von gebildetem Kohlendioxid (engl. Carbon Capture and Storage, CCS) erfolgen. Ziel der Reduzierung bzw. Vermeidung des Kohlendioxidausstoßes ist die Decarbonisierung.

Vorwiegend in der wissenschaftlichen Literatur werden auf Basis von Forschungsstudien unterschiedliche Verfahren für die CCS beschrieben, die aber bisher keine bis kaum kommerzielle Anwendung gefunden haben. Insbesondere können für die Abtrennung von Kohlendioxid aus Rauchgasen Aminwäschen und Kombinationsverfahren aus Membran- und Druckwechseladsorptionsverfahren (engl. Pressure Swing Adsorption, PSA) zum Einsatz kommen. Details zu den jeweiligen Einzelverfahren sind unten erläutert.

Aktuell existierende CCS-Prozesse sind ausgesprochen kostenintensiv, und zwar sowohl hinsichtlich der Erstellungkosten (engl. Capital Expenses, CAPEX) als auch hinsichtlich der Betriebskosten (engl. Operating Expenses, OPEX). Daher besteht der Bedarf nach hinsichtlich CAPEX und/oder OPEX verbesserten CCS-Prozessen.

### Offenbarung der Erfindung

Vor diesem Hintergrund werden ein Verfahren und eine Anlage zur Abtrennung von Kohlendioxid aus einem kohlendioxidhaltigen Gasgemisch mit den Merkmalen der jeweiligen unabhängigen Patentansprüche gelöst. Ausgestaltungen sind Gegenstand der abhängigen Patentansprüche und der nachfolgenden Beschreibung.

Im Rahmen der vorliegenden Erfindung werden zur Überwindung der eingangs erläuterten Nachteile des Standes der Technik Verfahrensvarianten vorgeschlagen, die jeweils die Verwendung zweier nichtkroygener Trennschritte und eines kryogenen Trennschritts umfassen. Ein "Trennschritt" kann dabei im hier zugrunde gelegten Verständnis die Verwendung einer oder mehrerer Trenneinrichtungen oder Trenneinheiten umfassen, die in beliebiger Weise seriell oder parallel angeordnet sein können, beispielsweise unterschiedlicher Druckwechseladsorptionseinheiten und/oder Membrantrenneinheiten.

Das vorgeschlagene Verfahren dient zur Abtrennung von Kohlendioxid aus einem Gasgemisch, das zumindest Kohlendioxid, Stickstoff, Sauerstoff, Argon und Wasser enthält, insbesondere aus einem Rauchgas, wobei das Verfahren einen ersten nichtkroygenen Trennschritt, einen zweiten nichtkryogenen Trennschritt sowie einen kryogenen Trennschritt umfasst, wobei der erste nichtkryogene Trennschritt und der zweite nichtkryogene Trennschritt Druckwechseladsorptionsschritte sind oder wobei der erste nichtkryogene Trennschritt ein Druckwechseladsorptionsschritt und der zweite nichtkryogene Trennschritt ein Membrantrennschritt ist. Lediglich zur Vereinfachung der Erläuterungen, und ohne eine hierdurch intendierte Einschränkung, wird der zweite nichtkroygene Trennschritt nachfolgend überwiegend als ein Druckwechseladsorptionsschritt beschrieben.

Da Druckwechseladsorptionsschritte und ggf. Membrantrennschritte im Rahmen des hier vorgeschlagenen Verfahrens zum Einsatz kommen, werden nachfolgend zunächst technische Grundlagen hierzu erläutert und entsprechende Definitionen vorgenommen.

Die PSA wird routinemäßig zur Trennung von gasförmigen Stoffgemischen verwendet. Bei der PSA nutzt man die unterschiedlich starken Adsorptionskräfte der einzelnen Gasmoleküle oder Atome gegenüber dem eingesetzten Adsorbens aus. Die PSA und Varianten hiervon sowie technische Grundlagen sind in der Fachliteratur beschrieben, beispielsweise in einem Artikel von H.-J. Bart und U. v. Gemmingen, "Adsorption", in Ullmann's Encyclopedia of Industrial Chemistry, Onlineveröffentlichung 2012, DOI: 10.1002/14356007.b03_09.pub2.

Den Einsatz der PSA zur Kohlendioxidabtrennung aus Rauchgasen ist bekannt. Aus der US 3,838,553 A ist beispielsweise eine Kombination einer PSA mit einer Tieftemperaturtrennung beschrieben. Die Entfernung von Kohlendioxid aus einem kohlendioxidreichen Strom ist beispielsweise auch in der US 766,251 B2 dargestellt. In der US 945286 A ist ein Verfahren mit ähnlichem Ziel offenbart, bei dem jedoch eine Membrantrennung eingesetzt wird.

Die PSA basiert auf physikalischen Adsorptionsphänomenen, wobei leicht flüchtige Verbindungen mit geringer Polarität wie Wasserstoff oder Helium im Vergleich zu Molekülen wie Kohlendioxid, Kohlenmonoxid, Stickstoff und Kohlenwasserstoffen praktisch nicht adsorbierbar sind. Die zuletzt genannten Komponenten können aufgrund ihrer unterschiedlichen Adsorptionskräfte getrennt werden. PSA-Verfahren arbeiten zwischen zwei Druckstufen. Die Adsorption erfolgt bei einem vergleichsweise hohen Adsorptionsdruck, während derer ein von den adsorbierten Komponenten befreites Gas oder Gasgemisch aus der PSA ausgeführt wird. Dieses wird hier auch als "Hochdruckstrom" bezeichnet. Die Desorption erfolgt dagegen bei einem vergleichsweise niedrigen Desorptionsdruck, wobei ein hier als "Niederdruckstrom" bezeichnetes Gas oder Gasgemisch bereitgestellt wird. Eine PSA, in der die Desorption auf einem unteratmosphärischen Druckniveau erfolgt, wird typischerweise auch als "Vakuum"-PSA (VPSA) bezeichnet.

Bei der PSA werden typischerweise mehrere, parallel geschaltete Druckbehälter eingesetzt, die mit einem Adsorbens befüllt sind. Mittels Verbindungsleitungen und entsprechenden Regelventilen kann jeweils mindestens einer der Druckbehälter auf dem Adsorptionsdruck mit dem Feedgas, hier "Trenneinsatz" genannt, durchströmt und auf diese Weise ein Hochdruckstrom gebildet werden. Ein oder mehrere weitere Druckbehälter werden während dieser Zeit unter Erhalt des Niederdruckstroms regeneriert. Die PSA stellt sich daher nach außen als kontinuierlicher Prozess dar, während es sich intern um einen diskontinuierlichen Prozess handelt, der aus einer Reihe von parallel ablaufenden Sequenzen besteht.

Bei Membrantrennverfahren wird eine Membran, d.h. ein für Komponenten eines Gemischs mehr oder weniger selektiv durchlässiges Element, verwendet. Die Membran bildet eine selektive Barriere zwischen zwei Phasen, dem Feed und dem Permeat. Komponenten mit hoher Permeanz können die Barriere passieren und sammeln sich auf der Permeatseite, während die anderen Komponenten mit niedriger Permeanz auf der Feedseite der Membran verbleibt, die auch als Retentat bezeichnet wird. Bei Membrantrennverfahren ergibt sich ein Druckabfall über die Membran, so dass das Permeat als Niederdruckstrom gewonnen wird (und hier entsprechend bezeichnet wird), wohingegen auf der Feedseite ein Hochdruckstrom anfällt (und hier entsprechend bezeichnet wird). Die Begriffe "Hochdruck" und "Niederdruck" sind dabei relativ zueinander zu verstehen.

Membranen für Membrantrennverfahren können aus verschiedenen Materialien hergestellt werden, z. B. aus Polymeren und Keramik. Ihr Material, ihre Struktur und ihre Homogenität bestimmen die Eigenschaften der Membran, die im Wesentlichen in der Durchlässigkeit sowie der physikalischen und chemischen Stabilität bestehen. Die in Membrantrennverfahren verwendeten Membranen können in einer geschlossenen Einheit angeordnet sein, die als Modul oder Kartusche bezeichnet wird. Solche Module können in Form, Packungsdichte und Durchflusskonfiguration stark variieren. Die treibende Kraft in der Membrantrennung ist der Partialdruckunterschied. Da sich auch die Temperatur auf die Leistung der Membranen auswirkt, sind Betriebsdruck und Temperatur die Schlüsselfaktoren für den Membranbetrieb.

Durch den Einsatz der vorliegenden Erfindung ergeben sich geringere CAPEX und OPEX im Vergleich zu absorptiven Lösungen. Ferner sind keine Chemikalien wie dort erforderlich und es ergeben sich keine Probleme mit Aminemissionen im Abgas und im Kohlendioxidprodukt. Aufgrund des nicht erforderlichen Waschmittelhandlings und des Ausgleichs von Waschmittelverlusten werden keine entsprechenden laufenden Kosten hierdurch generiert. Es ergibt sich ein einfacherer Betrieb, speziell in Bezug auf Änderungen der Prozessbedingungen, z.B. einen schwankenden Produktbedarf. Für die Kohlendioxidreinigung ist in Ausgestaltungen der Erfindung kein externes Kühlmedium erforderlich, insbesondere wenn ein gasförmiges Kohlendioxidprodukt gewonnen wird. Eine Trocknung des Kohlendioxidprodukts entfällt. Der Druck des Kohlendioxidprodukts kann deutlich höher als bei der Aminwäsche sein, wobei eine geringere Verdichterleistung und Verdichtergröße für die Produktverdichtung erforderlich sind. Dies ist insbesondere dann von Relevanz, wenn das Kohlendioxid z.B. für eine Sequestrierung auf hohem Druck bereitgestellt werden soll.

In einer Ausgestaltung der vorliegenden Erfindung umfasst das Verfahren, dass unter Verwendung des Gasgemischs oder eines Teils hiervon ein erster Trenneinsatz, der jeweils zumindest einen Teil des Kohlendioxids, des Stickstoffs, des Sauerstoffs, des Argons und des Wassers aus dem Rauchgas enthält, bereitgestellt und dem ersten nichtkryogenen Trennschritt unterworfen wird.

Generell soll hier unter einer "Bereitstellung" eines bestimmten Stoffstroms "unter Verwendung" eines anderen Stoffstroms jegliche Art der Bereitstellung verstanden werden, beispielsweise auch lediglich ein Führen eines entsprechenden Stoffstroms zu einem anderen Verfahrensschritt, also eine Bereitstellung ohne stoffliche, physikalische oder Mengenveränderung. Generell enthält ein unter Verwendung eines ersten Stoffstroms bereitgestellter zweiter Stoffstrom im hier zugrunde gelegten Verständnis zumindest einige in dem ersten Stoffstrom enthaltene oder aus diesem erhaltene Komponenten. Ein in diesem Sinne bereitgestellter zweiter Stoffstrom kann aus dem ersten Stoffgemisch beispielsweise durch Abtrennen oder Abzweigen eines Teils oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen, Entspannen und dergleichen erhalten werden.

Stoffströme können im hier verwendeten Sprachgebrauch ferner angereichert oder abgereichert an einer oder mehreren Komponenten sein, wobei sich diese Begriffe auf einen Gehalt in einem anderen Stoffstrom beziehen, unter Verwendung dessen der Stoffstrom gebildet wurde. Ein betrachteter Stoffstrom ist dabei "angereichert", wenn er zumindest den 2-fachen, 5-fachen, 10-fachen, 100-fachen oder 1.000-fachen Gehalt der bezeichneten Komponente(n) aufweist, und "abgereichert", wenn er höchstens den 0,5-fachen, 0,1-fachen, 0,01-fachen oder 0,001-fachen Gehalt der bezeichneten Komponente(n) aufweist, jeweils in Bezug auf den Stoffstrom, unter Verwendung dessen der betrachtete Stoffstrom gebildet wurde.

Mittels des ersten nichtkryogenen Trennschritts werden in einer entsprechenden Ausgestaltung ein erster Niederdruckstrom, der gegenüber dem ersten Trenneinsatz an Kohlendioxid angereichert ist und einen Teil des Stickstoffs, des Sauerstoffs und des Argons aus dem ersten Trenneinsatz enthält, sowie ein erster Hochdruckstrom bereitgestellt.

Unter Verwendung des ersten Niederdruckstroms oder eines Teils hiervon wird ferner ein zweiter Trenneinsatz, der jeweils zumindest einen Teil des Kohlendioxids, des Stickstoffs, des Sauerstoffs und des Argons aus dem Niederdruckstrom enthält, bereitgestellt und dem kyrogenen Trennschritt unterworfen.

Mittels des kryogenen Trennschritts werden ein Restgasstrom, der gegenüber dem zweiten Trenneinsatz an Kohlendioxid abgereichert ist und Kohlendioxid sowie einen Teil des Stickstoffs, des Sauerstoffs und des Argons aus dem zweiten Trenneinsatz enthält, sowie ein Kohlendioxidstrom bereitgestellt.

Unter Verwendung des Restgasstroms oder eines Teils hiervon wird ein dritter Trenneinsatz, der jeweils zumindest einen Teil des Kohlendioxids, des Stickstoffs, des Sauerstoffs und des Argons aus dem Restgasstrom enthält, bereitgestellt und dem zweiten nichtkryogenen Trennschritt unterworfen, und mittels des zweiten nichtkryogenen Trennschritts werden ein zweiter Niederdruckstrom, der gegenüber dem dritten Trenneinsatz an Kohlendioxid angereichert ist und einen Teil des Stickstoffs, des Sauerstoffs und des Argons aus dem dritten Trenneinsatz enthält, sowie ein zweiter Hochdruckstrom bereitgestellt.

Der zweite Niederdruckstrom oder ein Teil hiervon wird bei der Bereitstellung des zweiten Trenneinsatzes verwendet und kann dabei beispielsweise einem im Zuge dieser Bereitstellung eingesetzten Verdichter auf einer Zwischenstufe zugeführt.

Zu den Vorteilen einer entsprechenden Ausgestaltung sei auf die obigen Erläuterungen bezüglich der generellen Merkmale der Erfindung verwiesen. Weitere Merkmale und Vorteile werden nachfolgend erläutert.

Das eingesetzte Gasgemisch, beispielsweise ein Rauchgas, kann im Rahmen der vorliegenden Erfindung auf ca. 40°C abgekühlt werden. Bei Bedarf kann anschließend in einem Separator Kondensat(wasser) abgetrennt werden. Das wassergesättigte Gas wird verdichtet und als der erste Trenneinsatz dem ersten nichtkryogenen Trennschritt zugeführt werden, insbesondere einer VPSA. Der in dem ersten nichtkryogenen Trennschritt erhaltene Hochdruckstrom stellt eine an Kohlendioxid abgereicherte Fraktion dar. Ein hier gewonnener Niederdruckstrom kann als kohlendioxidreiche insbesondere einen Kohlendioxidgehalt von mehr als 50% im Volumenanteil aufweisen. Dieser kann verdichtet und anschließend getrocknet werden, wodurch der zweite Trenneinsatz bereitgestellt wird. Die Trocknung kann mittels Adsorption erfolgen und, wie nachfolgend nochmals erwähnt, kann als Regeneriergas insbesondere der wasserfreie Hochdruckstrom aus dem ersten oder zweiten nichtkryogenen Trennschritt verwendet werden. Der zweite Trenneinsatz wird dem kryogenen Trennschritt zugeführt.

In dem kryogenen Trennschritt wird das Gas auf eine Temperatur unterhalb der Kondensationstemperatur von Kohlendioxid auf dem verwendeten Trenndruck abgekühlt, und in einem Separator kann kondensiertes Kohlendioxid von den (bei den verwendeten Bedingungen) nicht kondensierbaren Komponenten (wie Stickstoff, Sauerstoff und Argon) getrennt werden. Die Fraktion nicht kondensierter Komponenten wird auch als sogenanntes Hochdruckflashgas (engl. High Pressure Flash) bezeichnet. Das auskondensierte flüssige Kohlendioxid kann einer weiteren Aufreinigung unterzogen werden, um den Gehalt an Kohlendioxid zu steigern bzw. die maximal zulässige Konzentration an Verunreinigungen, z.B. Sauerstoffkonzentration von beispielsweise weniger als 100 ppm im Volumenanteil, zu erreichen. Dies kann mittels Entspannung, Flashen, Abkühlung, Strippen, Destillation oder in einer Kombination der genannten Prozessschritte erfolgen.

Das Hochdruckflashgas, welches neben Stickstoff, Sauerstoff und Argon auch noch Kohlendioxid beinhaltet, wird zur Bereitstellung des dritten Trenneinsatzes verwendet und dem zweiten nichtkryogenen Trennschritt, bspw. einer zweiten PSA zugeführt, um die Ausbeute des Gesamtprozesses an Kohlendioxid zu steigern. In dem zweiten nichtkryogenen Trennschritt wird, wie in dem ersten nichtkryogenen Trennschritt, der entsprechende dritte Trenneinsatz unter Erhalt eines kohlendioxidarmen Hochdruckstroms und eines kohlendioxidreichen Niederdruckstroms getrennt. Der Niederdruckstrom kann, wie erwähnt, mit dem Niederdruckstrom des ersten nichtkryogenen Trennschritts verdichtet werden (insbesondere kann hierbei eine Zwischeneinspeisung in einen eingesetzten Verdichter erfolgen) und kann auf diese Weise zusammen mit dem ersten Niederdruckstrom der Trocknung und dem nichtkryogenen Trennschritt zugeführt werden.

Im Vergleich zu einer grundsätzlich möglichen Rückführung des Hochdruckflashgases vor die erste nichtkryogene Trennung sind hierbei besondere Vorteile erzielbar. Der zweite nichtkryogene Trennschritt, insbesondere eine PSA, kann im Vergleich zu dem ersten nichtkryogenen Trennschritt, insbesondere einer VPSA, bei deutlich höherem Adsorptionsdruck (ca. 15 bis 40 bar statt 2 bis 15 bar Absolutdruck) und Desorptionsdruck (ca. 1,5 bis 3,5 bar Absolutdruck statt eines unteratmosphärischen Druckniveaus) werden. Ohne den zweiten nichtkroygenen Trennschritt, d.h. bei Rückführung vor den ersten nichtkryogenen Trennschritt, müsste das Hochdruckflashgas auf ca. 3 bis 10 bar Absolutdruck entspannt werden, oder das eingesetzte Gasgemisch, beispielsweise Rauchgas, welches aber nur ca. 20% Kohlendioxid und 80% Ballast (hauptsächlich Stickstoff) beinhaltet, müsste auf 15 bis 35 bar Absolutdruck verdichtet werden. Des Weiteren müsste die kohlendioxidreiche Fraktion des zweiten nichtkroygenen Trennschritts (bzw. ein entsprechender Anteil des Niederdruckstroms des einzig vorhandenen ersten nichtkryogenen Trennschritts) bei deutlich geringerem Ansaugdruck verdichtet werden, was den Energiebedarf und die Größe der Maschine steigert. Zusätzlich ist durch den höheren Adsorptionsdruck die Selektivität zwischen Kohlendioxid- und Stickstofftrennung besser. Aufgrund der genannten Vorteile durch den zweiten nichtkryogenen Trennschritt, insbesondere eine zweite PSA, lässt sich der Energiebedarf deutlich reduzieren.

Besondere Vorteile können in Ausgestaltungen der Erfindung, in denen der zweite nichtkryogene Trennschritt insbesondere eine Druckwechseladsorption umfasst, also durch die Verwendung spezifischer Druckniveaus erzielt werden. Diese Ausgestaltungen können insbesondere umfassen, dass der erste Trenneinsatz auf einem Druck in einem ersten Druckbereich von 2 bis 15 bar Absolutdruck bereitgestellt und dem ersten nichtkryogenen Trennschritt unterworfen wird, dass der erste Niederdruckstrom mittels des ersten nichtkryogenen Trennschritts auf einem Druck in einem zweiten Druckbereich unterhalb von 1,5 bar Absolutdruck bereitgestellt wird, dass der zweite Trenneinsatz auf einem ersten Druck in einem dritten Druckbereich von 15 bis 40 bar Absolutdruck bereitgestellt und dem kryogenen Trennschritt unterworfen wird, dass der Restgasstrom mittels des kryogenen Trennschritts auf dem oder einem weiteren Druck in dem dritten Druckbereich bereitgestellt und dem zweiten nichtkryogenen Trennschritt unterworfen wird, und dass der zweite Niederdruckstrom mittels des zweiten nichtkryogenen Trennschritts auf einem Druck in einem vierten Druckbereich oberhalb von 1 bar Absolutdruck bereitgestellt wird. Die Vorteile entsprechender Drücke wurden soeben erläutert.

Entsprechendes gilt auch für Verfahrensvarianten gemäß Ausführungsformen der Erfindung, bei denen das Bereitstellen des zweiten Trenneinsatzes eine Verdichtung und Trocknung umfasst, und bei denen der erste oder zweite Hochdruckstrom oder ein Teil hiervon als Regeneriergas in der Trocknung verwendet wird.

Weitere Ausgestaltungen der vorliegenden Erfindung können umfassen, dass der erste und/oder der zweite Hochdruckstrom, oder jeweils ein Teil hiervon, einer Entspannung in einer oder in mehreren Entspannungsturbinen unterworfen wird. Eine oder mehrere solcher Entspannungsmaschinen können dabei mit einem Verdichter (Booster) oder einem Generator gekoppelt sein, so dass eine Verdichtung geeigneter Prozessströme bzw. eine Energiegewinnung erfolgen kann. Die Hochdruckströme können zur Druckerhöhung bzw. Einstellung einer Temperatur nach einer entsprechenden Entspannung zuvor angewärmt werden, wobei beispielsweise Abwärme aus einer Rauchgasbehandlung und -verdichtung genutzt werden kann.

In Ausgestaltungen der vorliegenden Erfindung kann der zweite Hochdruckstrom oder ein Teil hiervon einer Stickstoffgewinnung zugeführt und/oder zur Erzeugung von Kälte genutzt werden. Auf diese Weise ergeben sich besonders effiziente Verfahrensvarianten. Der zweite Niederdruckstrom oder ein Teil hiervon kann auch als ein Spülstrom (engl. Heavy Rinse) in dem ersten nichtkryogenen Trennschritt verwendet werden. Auf diese Weise kann die Stickstoffausschleusung gesteigert und somit der Energiebedarf bei der Verdichtung reduziert werden.

In Ausgestaltungen der vorliegenden Erfindung kann Gasgemisch einen Gehalt von 50 bis 70% Stickstoff, einen Summengehalt von 1 bis 15% Sauerstoff und Argon, einen Gehalt von 10 bis 20% Kohlendioxid und einen Gehalt von 15 bis 20% Wasser, jeweils im Volumenanteil, aufweisen und/oder auf einer Temperatur in einem Temperaturbereich von 100 bis 200 °C und/oder auf einem Druck in einem Druckbereich von 0,1 bis 1,5 bar Absolutdruck bereitgestellt werden und/oder aus einem Rauchgas eines insbesondere befeuerten verfahrenstechnischen Prozesses, einem Kraftwerksrauchgas und einem Abgas aus einer Zementherstellung ausgewählt sein.

Ausgestaltungen der vorliegenden Erfindung können dabei eine Abtrennung von 90 bis 99% des in dem Gasgemisch enthaltenden Kohlendioxids umfassen. Unter Verwendung des abgetrennten Kohlendioxids oder eines Teils hiervon kann auf diese Weise ein Kohlendioxidprodukt mit mehr als 99% Kohlendioxidgehalt und weniger als 100 ppm Sauerstoff im Volumenanteil bereitgestellt werden.

Eine Anlage zur Abtrennung von Kohlendioxid aus einem Gasgemisch, das zumindest Kohlendioxid, Stickstoff, Sauerstoff, Argon und Wasser enthält, ist ebenfalls Gegenstand der vorliegenden Erfindung, wobei das Verfahren zur Durchführung eines ersten nichtkroygenen Trennschritts, eines zweiten nichtkryogenen Trennschritts sowie eines kryogenen Trennschritts eingerichtet ist, wobei der erste nichtkryogene Trennschritt und der zweite nichtkryogene Trennschritt Druckwechseladsorptionsschritte sind oder der erste nichtkryogene Trennschritt ein Druckwechseladsorptionsschritt und der zweite nichtkryogene Trennschritt ein Membrantrennschritt ist.

Zu der erfindungsgemäß bereitgestellten Anlage sei auf die obigen Erläuterungen bezüglich des erfindungsgemäßen Verfahrens ausdrücklich verwiesen, da diese eine entsprechende Vorrichtung in gleicher Weise betreffen. Entsprechendes gilt insbesondere für eine Ausgestaltung einer entsprechenden Vorrichtung, die vorteilhafterweise zur Ausführung eines entsprechenden Verfahrens in einer beliebigen Ausgestaltung eingerichtet ist.

Die Erfindung wird nachfolgend unter Bezugnahme auf die Figuren, die eine Ausgestaltung der vorliegenden Erfindung veranschaulicht, weiter erläutert.

### Kurze Beschreibung der Figuren

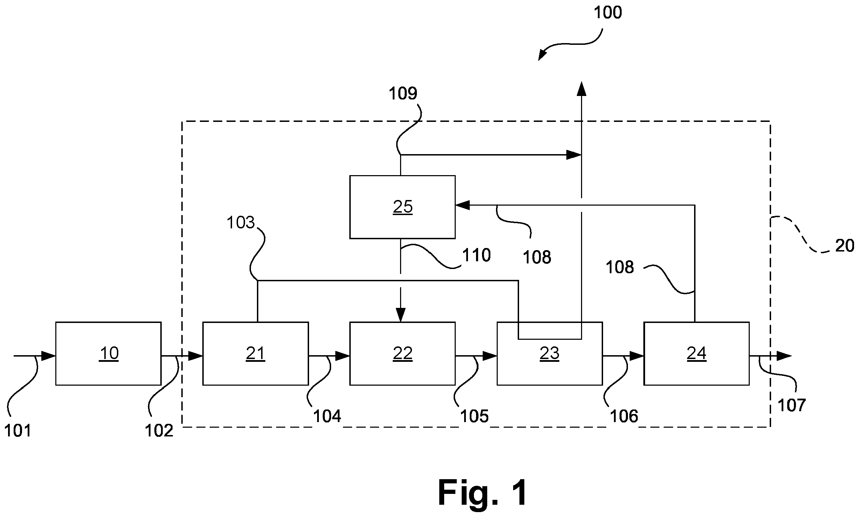

Figur 1 veranschaulicht ein Verfahren gemäß einer Ausgestaltung der Erfindung.

### Ausführliche Beschreibung der Zeichnungen

In der nachfolgenden Beschreibung werden Verfahren gemäß Ausgestaltungen der Erfindung erläutert. Lediglich der Einfachheit halber, und zur Vermeidung von unnötigen Wiederholungen, werden dabei für Verfahrensschritte und Anlagenkomponenten, beispielsweise einen VPSA-Schritt und eine hierzu verwendete VPSA-Einheit, dieselben Bezugszeichen verwendet. Erläuterungen bezüglich solcher Verfahrensschritte gelten dabei für entsprechende Anlagenkomponenten grundsätzlich in der gleichen Weise. Umgekehrt gelten Erläuterungen bezüglich Anlagenkomponenten auch für Verfahrensschritte.

Als Beispiel eines ersten nichtkryogenen Trennschritts ist eine VPSA und als Beispiel eines zweiten nichtkroygenen Trennschritts eine weitere PSA dargestellt, der Einfachheit halber als "erster Druckwechseladsorptionsschritt" und "zweiter Druckwechseladsorptionsschritt" bezeichnet.

In Figur 1 ist ein Verfahren gemäß einer Ausgestaltung der Erfindung schematisch veranschaulicht und insgesamt mit 100 bezeichnet.

Dem Verfahren 100 wird ein Gasgemisch 101, beispielsweise ein Rauchgasstrom, zugeführt, das in einem Vorbehandlungsschritt 10 auf eine Temperatur von beispielsweise ca. 40 °C abgekühlt und anschließend dort in einem nicht gesondert veranschaulichten Separator zumindest teilweise von Kondensat, d.h. insbesondere Wasser, befreit wird.

Das noch immer wassergesättigte Gas wird in dem Vorbehandlungsschritt 10, wie ebenfalls nicht gesondert veranschaulicht, verdichtet und in Form eines Gasstroms 102 als erster Trenneinsatz der VPSA, d.h. dem ersten nichtkryogenen Trennschritt 21, der hier als Teil einer Prozessgruppe 20 beschrieben ist, zugeführt. Dem ersten nichtkryogenen Trennschritt 21, d.h. der VPSA, werden eine an Kohlendioxid abgereicherte Fraktion als erster Hochdruckstrom 103 und eine kohlendioxidreiche Fraktion mit einem Gehalt von mehr als 50% Kohlendioxid als erster Niederdruckstrom 104 entnommen.

Die kohlendioxidreiche Fraktion bzw. der Niederdruckstrom 104 wird in einem Rohkohlendioxidverdichtungsschritt 22 auf einen Absolutdruck von beispielsweise mehr als 15 bar, insbesondere mehr als 20 bar Absolutdruck, verdichtet und anschließend, als Druckstrom 105, einem Trocknungsschritt 23 zugeführt und in diesem getrocknet. Der Trocknungsschritt 23 kann insbesondere mittels Adsorption erfolgen, wobei als Regeneriergas insbesondere die an Kohlendioxid abgereicherte Fraktion bzw. der Hochdruckstrom 109 aus der PSA (wie hier nicht gesondert gezeigt) oder 103 aus dem VPSA-Schritt (wie in Figur 1 gezeigt) verwendet werden kann, das nach dieser Verwendung aus dem Verfahren 100 ausgeführt und beispielsweise an die Atmosphäre abgegeben oder je nach Bedarf einer weiteren Rauchgasaufbereitung zugeführt werden kann oder zur Energierückgewinnung über einen Expander entspannt werden kann.

Das getrocknete kohlendioxidreiche Gas wird als zweiter Trenneinsatz 106 dem kryogenen Trennschritt 24 zugeführt. Dort wird das Gas abgekühlt. Anschließend können in einem Separator das kondensierte Kohlendioxid von nicht kondensierbaren Komponenten (Stickstoff, Sauerstoff, Argon) getrennt werden.

Das kondensierte Kohlendioxid bzw. ein entsprechender Kohlendioxidstrom kann mittels des kryogenen Trennschritts mit einem gewünschten Kohlendioxidgehalt bzw. einer Sauerstoffkonzentration auf einem maximal zulässigen Wert, beispielsweise weniger als 100 Vol.-ppm, bereitgestellt werden. Dies kann mittels Entspannung, Flashen, Abkühlung, Strippen, Destillation oder mittels einer beliebigen Kombination der genannten Prozessschritte erfolgen.

Die Kondensation des Kohlendioxids in dem kryogenen Trennschritt 24 erfolgt auf einem erhöhten Druckniveau von beispielsweise 5 bis 40 bar Absolutdruck. Die nicht kondensierbaren Komponenten können daher als Hochdruckflashgas 108, das neben Stickstoff, Sauerstoff und Argon auch noch Kohlendioxid beinhaltet, auf einem derartigen Druckniveau einem weiteren PSA-Schritt 25 zugeführt werden, der zuvor auch als "zweiter" PSA-Schritt bezeichnet wurde. Das Hochdruckflashgas 108 bildet damit zugleich einen dritten Trenneinsatz 108.

Mit dem zweiten nichtkryogenen Trennschritt 25, d.h. der weiteren PSA, wird die Kohlendioxidausbeute des Gesamtprozesses gesteigert. In dem weiteren PSA-Schritt wird das Hochdruck-Flashgas 108, wie in dem VPSA-Schritt, in eine kohlendioxidarme Fraktion bzw. einen zweiten Hochdruckstrom 109 und eine kohlendioxidreiche Fraktion bzw. einen zweiten Niederdruckstrom 110 getrennt. Der Die kohlendioxidreiche Fraktion bzw. der zweite Niederdruckstrom 110 kann ebenfalls dem Rohkohlendioxidverdichtungsschritt 22 zugeführt werden (beispielsweise über eine Zwischeneinspeisung) und zusammen mit dem Niederdruckstrom 104 aus dem ersten nichtkryogenen Trennschritt 21, d.h. der VPSA, dem Trocknungsschritt 23 sowie dem kryogenen Trennschritt 24 unterworfen werden.

## Patentansprüche

1. Verfahren (100) zur Abtrennung von Kohlendioxid aus einem Gasgemisch (101), das zumindest Kohlendioxid, Stickstoff, Sauerstoff, Argon und Wasser enthält, wobei das Verfahren (100) einen ersten nichtkroygenen Trennschritt (21), einen zweiten nichtkryogenen Trennschritt (25) sowie einen kryogenen Trennschritt (24) umfasst, wobei der erste nichtkryogene Trennschritt (21) und der zweite nichtkryogene Trennschritt (25) Druckwechseladsorptionsschritte sind oder der erste nichtkryogene Trennschritt (21) ein Druckwechseladsorptionsschritt und der zweite nichtkryogene Trennschritt (25) ein Membrantrennschritt ist.

2. Verfahren (100) nach Anspruch 1, das umfasst, dass
- unter Verwendung des Gasgemischs (101) oder eines Teils hiervon ein erster Trenneinsatz (102), der jeweils zumindest einen Teil des Kohlendioxids, des Stickstoffs, des Sauerstoffs, des Argons und des Wassers aus dem Gasgemisch (101) enthält, bereitgestellt und dem ersten nichtkryogenen Trennschritt (21) unterworfen wird,
- mittels des ersten nichtkryogenen Trennschritts (21) ein erster Niederdruckstrom (104), der gegenüber dem ersten Trenneinsatz (102) an Kohlendioxid angereichert ist und einen Teil des Stickstoffs, des Sauerstoffs, des Argons und des Wassers aus dem ersten Trenneinsatz (102) enthält, sowie ein erster Hochdruckstrom (103) bereitgestellt werden,
- unter Verwendung des ersten Niederdruckstroms (104) oder eines Teils hiervon ein zweiter Trenneinsatz (106), der jeweils zumindest einen Teil des Kohlendioxids, des Stickstoffs, des Sauerstoffs und des Argons aus dem Niederdruckstrom (104) enthält, bereitgestellt und dem kyrogenen Trennschritt (24) unterworfen wird,
- mittels des kryogenen Trennschritts (24) ein Restgasstrom (108), der gegenüber dem zweiten Trenneinsatz (106) an Kohlendioxid abgereichert ist und Kohlendioxid sowie einen Teil des Stickstoffs, des Sauerstoffs und des Argons aus dem zweiten Trenneinsatz (106) enthält, sowie ein Kohlendioxidstrom (107) bereitgestellt werden,
- unter Verwendung des Restgasstroms (108) oder eines Teils hiervon ein dritter Trenneinsatz (108), der jeweils zumindest einen Teil des Kohlendioxids, des Stickstoffs, des Sauerstoffs und des Argons aus dem Restgasstrom (108) enthält, bereitgestellt wird und dem zweiten nichtkryogenen Trennschritt (25) unterworfen wird, und
- mittels des zweiten nichtkryogenen Trennschritts (25) ein zweiter Niederdruckstrom (110), der gegenüber dem dritten Trenneinsatz (108) an Kohlendioxid angereichert ist und einen Teil des Stickstoffs, des Sauerstoffs und des Argons aus dem dritten Trenneinsatz (108) enthält, sowie ein zweiter Hochdruckstrom (109) bereitgestellt werden,
- der zweite Niederdruckstrom (110) oder ein Teil hiervon bei der Bereitstellung des zweiten Trenneinsatzes (106) verwendet wird.

3. Verfahren nach Anspruch 2, das umfasst, dass
- dem der erste Trenneinsatz (102) auf einem Druck in einem ersten Druckbereich von 2 bis 15 bar Absolutdruck bereitgestellt und dem ersten nichtkryogenen Trennschritt (21) unterworfen wird,
- der erste Niederdruckstrom (104) mittels des ersten nichtkryogenen Trennschritts (21) auf einem Druck in einem zweiten Druckbereich unterhalb von 1,5 bar Absolutdruck bereitgestellt wird,
- der zweite Trenneinsatz (106) auf einem ersten Druck in einem dritten Druckbereich von 15 bis 40 bar Absolutdruck bereitgestellt und dem kryogenen Trennschritt (24) unterworfen wird,
- der Restgasstrom (108) mittels des kryogenen Trennschritts (24) auf dem oder einem weiteren Druck in dem dritten Druckbereich bereitgestellt und dem zweiten nichtkryogenen Trennschritt (25) unterworfen wird,
- der zweite Niederdruckstrom (110) mittels des zweiten nichtkryogenen Trennschritts (25) auf einem Druck in einem vierten Druckbereich oberhalb von 1 bar Absolutdruck bereitgestellt wird.

4. Verfahren nach einem der Ansprüche 2 oder 3, bei dem das Bereitstellen des zweiten Trenneinsatzes (106) eine Verdichtung (22) und Trocknung (23) umfasst.

5. Verfahren nach Anspruch 4, bei dem der zweite Hochdruckstrom (109) oder der erste Hochdruckstrom (103) oder ein Teil hiervon als Regeneriergas in der Trocknung (23) verwendet wird.

6. Verfahren nach einem der Ansprüche 2 bis 5, bei dem der erste und/oder der zweite Hochdruckstrom (103, 109), oder jeweils ein Teil hiervon, einer Entspannung in einer oder in mehreren Entspannungsturbinen unterworfen wird und/oder die Entspannungsturbinen mit einem Verdichter kombiniert werden.

7. Verfahren nach einem der Ansprüche 2 bis 6, bei dem der zweite Hochdruckstrom (109) oder ein Teil hiervon einer Stickstoffgewinnung zugeführt und/oder zur Erzeugung von Kälte genutzt wird.

8. Verfahren nach einem der Ansprüche 2 bis 7, bei dem der zweite Niederdruckstrom (110) oder ein Teil hiervon als ein Spülstrom in dem ersten nichtkryogenen Trennschritt (21) verwendet wird.

9. Verfahren nach einem der vorstehenden Ansprüche, bei dem das Gasgemisch (101) einen Gehalt von 50 bis 70% Stickstoff, einen Summengehalt von 1 bis 15% Sauerstoff und Argon, einen Gehalt von 10 bis 25% Kohlendioxid und einen Gehalt von 15 bis 20% Wasser, jeweils im Volumenanteil, aufweist und/oder auf einer Temperatur in einem Temperaturbereich von 100 bis 200 °C und/oder auf einem Druck in einem Druckbereich von 0,1 bis 1,5 bar Absolutdruck bereitgestellt wird und/oder aus einem Rauchgas, einem Kraftwerksrauchgas und einem Abgas aus einer Zementherstellung ausgewählt ist.

10. Verfahren nach einem der vorstehenden Ansprüche, bei dem 90 bis 99% des in dem Gasgemisch (101) enthaltenden Kohlendioxids abgetrennt werden.

11. Verfahren nach einem der vorstehenden Ansprüche, bei dem unter Verwendung des abgetrennten Kohlendioxids oder eines Teils hiervon ein Kohlendioxidprodukt mit mehr als 99% Kohlendioxidgehalt und weniger als 100 ppm Sauerstoff im Volumenanteil bereitgestellt wird.

12. Anlage zur Abtrennung von Kohlendioxid aus einem Gasgemisch (101), das zumindest Kohlendioxid, Stickstoff, Sauerstoff, Argon und Wasser enthält, wobei das Verfahren (100) zur Durchführung eines ersten nichtkroygenen Trennschritts (21), eines zweiten nichtkryogenen Trennschritts (25) sowie eines kryogenen Trennschritts (24) eingerichtet ist, wobei der erste nichtkryogene Trennschritt (21) und der zweite nichtkryogene Trennschritt (25) Druckwechseladsorptionsschritte sind oder der erste nichtkryogene Trennschritt (21) ein Druckwechseladsorptionsschritt und der zweite nichtkryogene Trennschritt (25) ein Membrantrennschritt ist.

13. Anlage nach Anspruch 12, die zur Durchführung eines Verfahrens nach einem der Ansprüche 1 bis 11 eingerichtet ist.
